# EUROPEAN PATENT SPECIFICATION

(11) **EP 0 711 202 B1**
(45) Date of publication and mention of the grant of the patent: **22.12.1999**
(21) Application number: 94917882.6
(22) Date of filing: 22.03.1994
(51) Int. Cl.: B01J 20/08, B01J 20/20, B01J 20/28, B01D 39/00

(54) **REACTIVE MEMBRANE FOR FILTRATION AND PURIFICATION OF GASES OF IMPURITIES AND METHOD UTILIZING THE SAME**
REACTIVE MEMBRAN, VERFAHREN ZU IHRER HERSTELLUNG UND IHRE VERWENDUNG
MEMBRANE REACTIVE CONCUE POUR FILTRER ET PURIFIER DES GAZ CONTENANT DES IMPURETES, ET SON PROCEDE D'UTILISATION

(30) Priority: 27.07.1993 US 97050
(43) Date of publication of application: 15.05.1996
(73) Proprietor: THE UNIVERSITY OF ARIZONA, Tucson, Arizona 85721-0151 (US)
(72) Inventor: SHADMAN, Farhang, F., Tucson, AZ 85718 (US)
(74) Representative: Knott, Stephen Gilbert
(86) International application number: US9403170
(87) International publication number: WO9503885

(56) References cited:
- EP-A- 0 340 542
- EP-A- 0 428 052
- US-A- 4 242 226
- US-A- 4 685 940
- US-A- 4 946 592
- US-A- 5 037 791
- US-A- 5 196 380

## Description

### Field of the Invention

This invention relates to a reactive membrane, a method of forming the reactive membrane, and a method of filtering and purifying gases of impurities.

### Background of the Invention

In order to manufacture advanced materials such as semiconductor devices, trace impurities on the parts per million (ppm) to parts per billion level (ppb) and even sub-ppb levels in any of the manufacturing constituents must be substantially avoided. For example, in manufacturing semiconductor devices, impurities (e.g., moisture, oxygen and organic compounds) in process gases adsorb on the semiconductor wafer, degrade its performance, and lower the manufacturing yield and device reliability. There are generally two types of impurities in process gases: heterogeneous (e.g., particles and macromolecules) and homogeneous (e.g., dissolved particles). Typically, heterogeneous impurities are removed by filtration and homogeneous impurities are removed by purification. There has been particular interest in the removal of homogeneous impurities from process gases.

U.S. Patent No. 5,196,380 to Shadman discloses a reactive membrane for the removal of homogeneous impurities from a gas stream. The reactive membrane comprises a ceramic substrate, a carbon layer coating the substrate, and a reactive layer including metal species in reduced form bound to the carbon layer. Although this membrane is effective in the removal of homogeneous impurities, it has several limitations. The affinity or bond between the carbon layer and the ceramic substrate is very important. If the affinity or bond is not strong enough, the carbon may disassociate from the ceramic substrate and contaminate the gas stream during filtration/purification. The carbon layer coating the ceramic substrate may also exhibit a lack of uniformity.

Additionally, according to U.S. Patent No. 5,196,380, the reactive membrane is formed by impregnating the carbon layer with the metal species using a solution of metal-bearing compounds. The carbon layer and metal species are then heated in an inert atmosphere to activate the reactive membrane. Unfortunately, residual solvent, namely water, remaining on the carbon layer after impregnation with metal species may interfere with the subsequent activation of the reactive layer. This is particularly troublesome if the residual solvent is potentially oxidizing or strongly chemisorbed on the metal species. Further, in an inert atmosphere, the activation and regeneration of the metal species bound to the carbon layer require extended periods of time and high temperatures in order to effect reduction of the metal species and formation of the reactive layer.

### Summary of the Invention

The present invention provides a reactive membrane for removing impurities from a gas comprising a porous metal substrate and at least one carbon layer deposited on the porous metal substrate, the carbon layer being modified to present active sites which include at least partially deoxygenated metal species chemically bonded to the carbon layer.

The present invention also provides a method for forming a reactive membrane for removing homogeneous and heterogeneous impurities from gases, said method comprising depositing at least one layer of carbon on a porous metal substrate, depositing a precursor metal species on the carbon layer, and heating the porous metal substrate to form active sites on the carbon layer, wherein the active sites include at least partially deoxygenated metal species chemically bonded to the carbon layer.

A reactive membrane embodying the present invention and including a porous metal substrate provides many advantages over conventional reactive membranes. For example, the affinity or bond between the carbon layer and the porous metal substrate is greater than the affinity or bond between the carbon layer and a porous ceramic substrate. Thus, the carbon may be more readily and more efficiently deposited on the porous metal substrate. Further, during filtration/purification, the stronger affinity or bond between the carbon layer and the porous metal substrate reduces the possibility of contamination of the gas stream and clogging of the pores of the membrane with carbon particulates that might otherwise sluff off the substrate. The carbon layer also coats the porous metal substrate more uniformly than the ceramic substrate, providing a more uniform surface for subsequent impregnation with the precursor metal species, thus forming an improved reactive membrane.

Another advantage is that metal substrates can be made in many different shapes and forms, and with a wide variety of pore sizes. This provides a wider choice of membrane geometries as well as better control of filtration parameters, such as pore rating and pressure drop, through pore size selection. Additionally, the membrane will frequently be placed in a metal housing, often requiring the membrane to be attached to the housing. A metal substrate is more easily and reliably welded to a metal housing, creating a better and stronger seal. Welding a dissimilar material, such as a ceramic substrate, to a metal housing is more difficult particularly under temperature excursions and could result in a weak seal, allowing the gas stream to bypass the membrane. The improved seal between the metal housing and the metal substrate would virtually eliminate the possibility of bypass.

A method embodying the invention and using a non-aqueous solvent to deposit the metal species on the carbon layer has many advantages. For example, after the mixture of the non-aqueous solvent and the metal species contact the carbon layer, the non-aqueous solvent may be easily evaporated from the carbon layer without leaving any residual solvents. This is particularly important if the residual solvent is potentially oxidizing or is strongly chemisorbed to the metal species. Either would interfere with and hinder the subsequent thermal activation step to form the reactive layer. In a preferred embodiment, anhydrous liquid ammonia is used as the non-aqueous solvent. Not only does anhydrous liquid ammonia evaporate easily, but it is inherently reducing, not oxidizing, and therefore facilitates the activation of the metal species as the carbon layer is heated to form active sites. Additionally, since the metal sites have never been exposed to water when anhydrous liquid ammonia is used as the solvent, the difficulties in removing strongly chemisorbed water molecules from the metal sites are avoided entirely. Finally, anhydrous liquid ammonia readily dissolves many of the metal species, providing high loadings and uniform distribution of the metal species on the carbon layer.

A method embodying the invention and using a reducing atmosphere for activation and/or regeneration of the metal species is particularly advantageous. For example, a reducing atmosphere facilitates active site formation by reducing the time and temperature necessary to partially or substantially deoxygenate the precursor metal species and bind the metal species to the carbon layer. Further, during regeneration of the active sites in a reducing atmosphere containing hydrogen, reduction and deoxygenation of the metal species may utilize the hydrogen gas instead of the carbon layer as the reducing agent. This diminishes the consumption of the carbon layer during regeneration.

### Description of a Preferred Embodiment

The present invention will now be described more fully hereinafter. This invention may, however, be embodied in many different forms and should not be construed as limited to the embodiment set forth herein; rather, this embodiment is provided so that this disclosure will be thorough and complete, and will fully convey the scope of the invention to those skilled in the art.

The present invention provides a reactive membrane for filtering and purifying gases of impurities. The reactive membrane includes a porous metal substrate and at least one layer of carbon deposited on the porous inorganic substrate. The carbon layer is modified to present active sites, which include at least partially deoxygenated metal species (metal in reduced form) chemically bonded to the carbon layer. The metal in reduced form is capable of interacting and, preferably, reacting with the impurities, thereby scavenging and removing the impurities from the gas.

The substrate layer has a plurality of pores and is effective in removing heterogeneous impurities (i.e., particles and macromolecules) from the gas being filtered and purified. The porous substrate is resistant to temperatures greater than about 300°C, and preferably temperatures greater than about 500°C, to permit the reactive membrane to be regenerated after use, i.e., after deactivation by interaction with impurities.

Porous substrates of a porous metal typically have a larger initial pore size, e.g., on the order of 2 to 5 microns, than a porous ceramic substrate. Many commercially available porous metal materials may be used, but porous metal filters formed, for example, by sintering a metal powder or metal fibers are particularly preferred. An exemplary porous stainless steel substrate is a porous 316L stainless steel substrate which is formed from sintered stainless steel fibers and has an initial pore size of about 4 microns. Such stainless steel substrates are commercially available from Pall Corporation of East Hills, New York, USA.

Many of the advantages of a porous metal substrate over a porous ceramic substrate relate to the deposition of the carbon layer on the substrate. When the carbon layer is deposited on the porous metal substrate, it is deposited as a carbon film. This carbon film has a stronger bond or affinity for porous metal substrates in comparison to ceramic substrates which provides for less loss of carbon particulates during filtration/purification, reducing the possibility of contamination of the gas stream and fouling of the pores of the substrate. Further, the carbon layer can be more efficiently and uniformly deposited on a porous metal substrate.

The carbon layer is preferably deposited on substantially all of the exposed surfaces of the porous substrate. Porous substrates which include a porous metal substrate typically have carbon layers deposited on their exposed surfaces, preferably thicker than from about 20Å to about 100Å. The deposited layer of carbon is in the form of a carbon film, which has a strong affinity or bond to the exposed surfaces (i.e., the carbon is not deposited as fluffy carbon or carbon filaments), to prevent carbon particulates from sloughing off the substrate surfaces and possibly clogging the pores of the membrane. Typically, the porous substrate is degassed prior to the deposition of the carbon layer to remove any preexisting impurities in the substrate. The carbon layer preferably is deposited over and coats substantially the entire surface area of the porous substrate (i.e., substantially all of the exposed surfaces of the porous substrate) and reduces the pore size of the substrate.

An exemplary technique for depositing the carbon layer is a CVD technique via the disproportionation of carbon monoxide (CO) or the dissociation of other carbon sources such as various hydrocarbons. The deposition can occur under various reaction times and temperatures, and gas compositions, the control of which being within the skill of one in the art. For example, if CO is used as the carbon source, the disproportionation may be conducted at a temperature above about 250°C using a gas mixture of about 5 to 15 percent by volume CO, 1 to 5 percent by volume hydrogen and the remainder a relatively inert gas such as nitrogen. Preferably, the disproportionation is carried out using a mixture of CO and hydrogen, which contains from about 6% to about 14% hydrogen (by volume), at a temperature of from about 350°C to about 450°C. The thickness and amount of carbon deposited may be controlled by adjusting the reaction time, temperature, gas composition and gas flow rate. Carbon deposition is typically more uniform and efficient with metal substrates or with ceramic substrates which include metallic impurities. For example, good carbon deposition may be achieved at about 435°C on a 1.1" diameter filter disk formed from sintered stainless steel fibers using an about 88/12 (vol/vol) mixture of CO and hydrogen at a total gas flow rate through the filter disk of about 500 cc/min.

The active sites include at least one metal species in reduced form chemically bonded to the carbon layer. The metal species is capable of reacting or otherwise interacting with the impurities of the gas stream. The term "in reduced form" relates to the oxidation state of the metal in that the oxygen is present in less than the stoichiometric amount in the metal oxide (i.e., the metal species is partially, substantially, or completely deoxygenated). The reduced form of the metal may include metal or metal suboxides chemisorbed on carbon as well as metal-carbon intercalate compounds. In other words, the carbon layer is modified to present active sites which include partially, substantially, or completely deoxygenated metal species chemically bonded to the carbon layer. Preferably, the active sites include substantially deoxygenated metal species which are capable of reacting with trace impurities in a gas stream. Exemplary metals include manganese, magnesium, and alkali metals such as lithium, sodium and potassium.

The formation of the active sites may be carried out by first depositing a precursor metal species on the carbon layer. The precursor metal species may include an oxidized form of the metal and/or a deoxygenated form of the metal. The precursor metal species may be deposited by using a CVD technique, e.g., forming a vapor of the precursor metal species to be deposited and contacting the precursor metal species vapor with the layer of carbon deposited on the porous substrate layer. The vapor, for example, may be generated from the metal itself or from a hydroxide or oxide of the metal. The temperature for deposition depends on the specific porous substrate and precursor metal species and, typically, is greater than about 300°C.

Alternately, the precursor metal species may be deposited from a mixture which includes a solvent and the precursor metal species. The mixture of the precursor metal species and the solvent may be either a solution or a slurry. In a solution, the precursor metal species dissolve in the solvent, forming a homogeneous mixture. In a slurry, the precursor metal species are suspended in the solvent, forming a finely dispersed heterogeneous mixture. Solutions of metal-bearing compounds such as metal hydroxides or oxalates may be employed to impregnate the carbon-coated substrate with the metal precursor species. For example, if manganese is used, an aqueous solution of manganese oxalate is suitable for this purpose.

A preferred method of depositing the precursor metal species is to dissolve or slurry the precursor metal species in a non-aqueous solvent. Preferably, the non-aqueous solvent is a solvent which may be easily evaporated without leaving a residue, e.g., a solvent such as anhydrous liquid ammonia. Use of a non-aqueous solvent which may be easily evaporated is a distinct advantage of the present invention in terms of ease of preparation and uniformity of deposition. Further, the absence of water or other oxidizing solutions during the precursor metal deposition step allows less severe conditions, such as less time or lower temperature, to be employed in the subsequent activation of the metal species where the metal species are partially, substantially, or completely deoxygenated. Exemplary mixtures of a precursor metal species in a non-aqueous solvent include solutions of an alkali metal, such as sodium, in anhydrous liquid ammonia. If metals, which are insoluble or only sparingly soluble in a non-aqueous solvent such as anhydrous liquid ammonia, are to be used as the precursor metal species, a slurry of a very fine powder of the metal and the non-aqueous solvent may be suitable for depositing the metal on the carbon layer.

The mixture of the precursor metal species is passed through the carbon-coated porous substrate, thereby depositing the precursor metal species on the carbon layer. Nitrogen or another inert gas may be used to force the mixture through the porous substrate or suction may be used to draw the mixture through the porous substrate.

After passing the mixture through the porous substrate to deposit the metal precursor species on the carbon layer, the non-aqueous solvent may be driven off by purging with an inert gas such as nitrogen. Gradual heating to about 110°C and, preferably 200°C or greater, may facilitate the purging process.

The substrate bearing the deposited precursor metal species is then heated to form metal species chemically bonded to the carbon layer, i.e., to form active sites on the carbon layer. The term "chemically bonded" is intended to include ionic and covalent bonds and van der Waals forces. In other words, "chemically bonded" includes absorbed metal and metal suboxides on carbon as well as various metal-carbon groups and intercalate compounds. Typically, the chemical bonding is accomplished by heating the substrate to greater than about 300°C, preferably about 380°C to about 400°C, and most preferably about 500°C, thereby forming the active sites on the carbon layer. The formation of the active sites may be carried out by heating the substrate in an inert atmosphere such as nitrogen, argon, helium, and the like. If the active sites include lithium, potassium or magnesium species, argon or helium is preferably used to provide the inert atmosphere. The presence of the inert atmosphere lessens the opportunity for impurities and, in particular, oxidizing impurities, in the atmosphere to come into contact with the membrane being activated. If impurities are present in the gas in contact with the membrane during the activation process, the impurities may interact with and consume active sites. The loss of active sites may adversely affect the impurity removal capabilities of the reactive membrane. Preferably, the activation process is carried out under ultra pure inert gas to avoid the deactivation of active sites due to trace impurities in the inert gas.

The inert gas may also include a reducing gas, e.g., hydrogen, to facilitate active site formation. Use of a reducing gas such as hydrogen during the activation process may significantly reduce the time and/or temperature required to form the active sites. The presence of the reducing gas promotes the partial, and preferably substantial, deoxygenation of the metal species, forming the desired reduced form of the metal as active sites. The presence of the reducing gas also reduces the consumption of the carbon layer as the reducing agent during regeneration, thus prolonging the life of the reactive membrane. Preferably, the inert gas employed during the activation process includes at least about 1 percent, more preferably from about 2 to about 35 percent, most preferably from about 4 to about 10 percent hydrogen. In another embodiment, the activation process may be carried out by heating the substrate to greater than about 300°C under vacuum.

Typically, the substrate is heated to greater than about 500°C and maintained at that temperature for a suitable amount of time to form the active sites (e.g., about one hour) while being purged with a mixture of an inert gas preferably having at least about 4 percent hydrogen. This activates the active sites of the carbon layer by reacting the precursor metal species with the carbon to form active sites on the substrate, i.e., to form metal species chemically bonded to the carbon layer. The metal active sites may exist in the reduced form (C-M), as an adsorbed metal, as a metal suboxide, or in oxidized form (CO₂M), with the removal of the oxygen necessary to have the preferred highly reactive reduced form. Stated otherwise, the metal in reduced form has no, or less than a stoichiometric amount of oxygen, i.e., the metal species is partially, substantially, or completely deoxygenated. Preferably, the metal species is substantially deoxygenated. The chemical bond anchors the reactive metal species to the carbon and the carbon is anchored to the porous substrate, especially a porous metal substrate. Thus, because the metal species and carbon are anchored, contamination of the gas stream during filtration/purification is avoided.

In another embodiment, several different metals can be deposited sequentially or as a mixture onto the carbon layer to permit removal of selective impurities as the gas passes through each of the layers of the filter membrane. In still another embodiment, the reactive membrane may include two or more layers of carbon deposited on the exposed surfaces. Each carbon layer may be individually modified to present active sites. Such membranes may be produced by sequentially depositing a carbon layer, depositing a precursor metal species on the carbon layer and then heating the membrane to form the active sites on the carbon layer. This sequence may be repeated until the desired number of activated carbon layers has been produced. Reactive membranes, which include at least two carbon layers with each layer presenting active sites, have a number of advantages. Such multi-carbon layer membranes have a very high impurity removal capacity. The active sites on the carbon layers may include more than one metal species. For example, a reactive membrane may include first and second carbon layers deposited on substantially all of the exposed surfaces of the porous inorganic substrate. The first carbon layer may be modified to present active sites which include at least partially deoxygenated first metal species chemically bonded to the first carbon layer and the second carbon layer may be modified to present active sites which include at least partially deoxygenated second metal species chemically bonded to the second carbon layer. This may permit the use of two metals which require different deposition methods (e.g., one via CVD and the other via non-aqueous solution deposition).

The present reactive membranes are highly effective for removing a variety of impurities from a gas. For example, a reactive membrane embodying the present invention may be used to remove an impurity, such as oxygen (O₂), water (H₂O), carbon monoxide (CO), carbon dioxide (CO₂) or methane (CH₄), from a gas stream, e.g., a stream of an inert gas such as nitrogen or argon. By passing the gas including the impurities through the reactive membrane and interacting the impurities with the active sites, the concentration of the impurity in the gas may be reduced to no more than about 100 ppb, preferably to no more than about 1 ppb. By employing a reactive membrane embodying the present invention, the concentration of water or carbon monoxide in an inert gas may be reduced to no more than about 0.7 ppb. A reactive membrane embodying the present invention may be employed to reduce the concentration of methane in an inert gas to no more than about 0.2 ppb. A reactive membrane embodying the present invention may also be employed to reduce the concentration of oxygen or carbon dioxide in an inert gas to no more than about 0.1 ppb.

The reactive membranes of this invention may find use in a variety of applications. For example, the reactive membranes may be employed in the removal of trace gas contaminants such as O₂, CO₂, H₂O, CO and CH₄ at the point of use in electronic manufacturing processes. They also may find use in the removal of gaseous and particulate contaminants in gas or liquid source streams used in electronics manufacture, e.g., the removal of metal oxides that may be formed in tubing. Additionally, the reactive membranes embodying this invention may find use in the treatment of exhaust gas streams from various processes, e.g., in the removal of small amounts of cyanides, silanes, arsenic, mercury and the like, including poisonous particulates which may be present in gaseous exhaust streams from processes used in electronics manufacturing.

The reactive membranes are also extremely effective for the purification of inert gases, even at temperatures as low as room temperature. For example, the reactive membranes of the present invention may be used to remove impurities, such as oxygen, moisture, carbon dioxide and hydrocarbons, from inert gases. The present invention permits the achievement of levels of purification that are significantly better than those which may be realized with the best commercial purification systems.

The present reactive membranes may also be used to remove moisture from streams of reactive gases such as oxygen, silanes, hydrogen chloride (HCl) and hydrogen bromide (HBr). Typically, reactive membranes having active sites which include sodium or magnesium species chemically bonded to the carbon layer may be employed for this purpose. Even though the reactive gas may react with the active sites, moisture may still be chemisorbed by the reactive membrane (i.e., the water interacts with the active sites, thereby substantially removing the water from the reactive gas). For example, although HCl or HBr may react with an active site (e.g., active sites which include magnesium species) to form a metal halide, moisture may still be chemisorbed by the metal halide to form a hydrate. Similarly, oxygen may react with the metal species of the active sites to form an oxidized site. Since the oxidized sites are capable of interacting with moisture, the reactive membranes of the present invention may be employed to remove trace levels of moisture from a reactive gas like oxygen. Reactive membranes embodying the present invention may also be used to remove oxygen from silanes.

In operation, a gas stream including impurities is passed through the reactive membrane, which may have any one of a variety of known configurations. It is recognized that a liquid stream could also be filtered/purified by altering the membrane in a manner known to those skilled in the art. Heterogeneous particles are removed from the gas stream by well known filter mechanisms. The active sites of the membrane interact, and preferably react, with trace homogeneous impurities present in the gas stream (e.g. oxygen, metallic compounds and the like, moisture or organic compounds) thereby removing the homogeneous impurities from the gas stream. Although applicant does not wish to be bound by any theory, it is thought that substantially all of the impurity molecules come in contact with the metal molecules of the reactive layer, interact, and are removed by the membrane from the gas being filtered and purified. In other words, the impurities interact with the metal species which are bonded to the active sites of the carbon layer, thereby scavenging and removing the impurities from the gas phase.

Once purification is complete and all of the reduced metal is oxidized or otherwise deactivated, the membrane may be regenerated by heating the substrate to greater than about 300°C in an inert atmosphere (e.g., nitrogen or argon) to reduce the oxidized metal (i.e., regenerate the active sites). Alternatively, the regeneration may be carried out by heating the deactivated reactive membrane to greater than about 300°C under a reducing atmosphere, such as a hydrogen-containing atmosphere. The regeneration capability of the reactive membrane, a process which may be carried out many times, provides a significant advantage over known filtration/purification materials which typically may be used only once and for which there are apparently no known means of regeneration.

The membrane may be regenerated after use by heating the membrane to at least about 300°C, preferably to greater than about 450°C, most preferably to a temperature of about 450°C to about 550°C, in an inert atmosphere (e.g., nitrogen, argon, helium and the like). The carbon layer may participate in regeneration of the active sites in that, on heating in an inert atmosphere, the carbon may function as a reducing agent. The regeneration process is typically carried out for a time period of about 24 to 28 hours, although longer time periods, e.g., about 48 hours, may also be employed.

Alternatively, the reactive membrane may be regenerated after use by heating the membrane to greater than about 300°C, and preferably to a temperature of about 450°C to about 550°C, in the presence of a reducing atmosphere, such as a hydrogen-containing atmosphere. For example, the membrane may be regenerated by heating to greater than about 500°C and maintaining the membrane at that temperature for about one hour or more while it is purged with a mixture of hydrogen and an inert gas. Preferably, the regeneration process is carried out using an atmosphere of an inert gas having from about 2 percent to about 100 percent hydrogen (vol:vol), more preferably from about 10 percent to about 40 percent hydrogen. Typically, the regeneration of the reactive membrane is carried out for a time period of from about 8 to about 12 hours under these conditions. As with the activation process used to originally form the active sites, the regeneration may also be carried out under an inert gas containing a lesser amount of hydrogen. With lower concentrations of hydrogen, longer times and/or higher temperatures are typically employed for the regeneration process. For example, the regeneration of a stainless steel reactive membrane may be carried out by heating the membrane for 12 to 24 hours at about 500°C while purging with a 35:65 (vol:vol) mixture of hydrogen and nitrogen.

The filtration of heterogeneous impurities and the purification of homogeneous impurities may occur substantially simultaneously, i.e., with the heterogeneous impurities being trapped by the pores of the substrate and the homogeneous impurities interacting with the active sites of the carbon layer deposited on the substrate. Alternatively, the two different types of impurities may be removed by different regions of the reactive membrane. For example, the reactive membrane may include a separate porous region, e.g., an upstream layer of porous medium, which functions to substantially filter the heterogeneous impurities from the gas. In another embodiment of the invention, a separate porous medium, (e.g., a ceramic filter) which is placed upstream of the reactive membrane may be used to remove substantially all of the heterogeneous impurities from the gas stream.

The present invention is further illustrated by the following examples.

### Example 1

### Sodium Species on Carbon-Coated Porous Stainless Steel

A porous stainless steel disk (1.1" diameter, 0.25" thick; formed by sintering about 2 micron 316L stainless steel fibers) having a pore size of about 4 microns is degassed under a nitrogen atmosphere at about 400°C to remove any impurities. A carbon film layer is deposited on substantially all of the exposed surfaces of the substrate using the following procedure. The stainless steel substrate is heated to about 435°C for about six hours while passing an about 88:12 (vol:vol) mixture of CO and hydrogen through the substrate at a total flow rate of about 500 cc/mm. The carbon layer formed covers substantially all of the exposed surfaces of the substrate.

The deposition of the precursor metal species on the carbon-coated metal substrate is accomplished by non-aqueous impregnation. Sufficient sodium is dissolved in anhydrous liquid ammonia to form a dark blue colored solution (about 0.6g sodium/100ml liquid ammonia). The liquid ammonia solution of sodium is forced through the carbon-coated metal substrate using a positive pressure of nitrogen gas. The ammonia is then removed by heating the membrane to about 200°C while purging with dry ultrapure nitrogen. The activation of the membrane to generate active sites which include sodium species in substantially deoxygenated form is then accomplished by heating the impregnated membrane for about 12 hours at a temperature of about 500°C while purging the membrane with a dry 35:65 (vol:vol) mixture of hydrogen gas and ultrapure nitrogen gas.

### Examples 2-6

### Removal of Impurities from a Nitrogen Gas Stream

The ability of reactive membranes prepared according to the procedure of Example 1 to remove impurities from a stream of inert gas is tested by passing a stream of ultrapure nitrogen gas, to which an impurity is added, through the membrane. During the test the membrane is maintained at about room temperature while the nitrogen gas containing the impurity is passed through the membrane for the time period indicated at a flow rate of about 800-1000 cc/mm. The input and output concentration of the impurity is measured at intervals throughout the duration of the test. The results are shown below in Table I. In all of the experiments shown, a steady state output impurity concentration is achieved very rapidly and maintained throughout the duration of the test.

**TABLE I**

| | | | Impurity Conc. (ppb) | |
|---|---|---|---|---|
| Ex. No. | Impurity | Time (min) | Input Conc. | Output Conc. |
| 2 | O₂ | 200 | 10,000. | <0.1 |
| 3 | H₂O | 200 | 1,020 | 0.6 |
| 4 | CO | 4600 | 350 | <0.7 |
| 5 | CH₄ | 200 | 100 | <0.2 |
| 6 | CO₂ | 200 | 50 | 0.1 |

The results in Table I demonstrate that the reactive membranes of the present invention are highly effective for removing a variety of impurities from a gas.

In the specification, there have been disclosed typical preferred embodiments of the invention and, although specific terms are employed, they are used in a generic and descriptive sense only and not for purposes of limitation, the scope of the invention being set forth in the following claims.

## Claims

1. A reactive membrane for removing impurities from a gas comprising:
(a) a porous metal substrate; and
(b) at least one carbon layer deposited on the porous metal substrate, the carbon layer being modified to present active sites which include at least partially deoxygenated metal species chemically bonded to the carbon layer.

2. The reactive membrane according to claim 1 wherein the porous metal substrate has a pore size in the range from about 2 to about 5 microns.

3. The reactive membrane according to claim 1 or 2 wherein the porous metal substrate comprises sintered metal fibers.

4. The reactive membrane according to any of the preceding claims wherein the porous metal substrate comprises sintered metal powder.

5. The reactive membrane according to any of the preceding claims wherein the porous metal substrate comprises stainless steel.

6. The reactive membrane according to claim 5 wherein the stainless steel comprises 316L stainless steel.

7. The reactive membrane according to any of the preceding claims wherein the carbon layer is deposited directly on the porous metal substrate.

8. The reactive membrane according to any of the preceding claims wherein the carbon layer covers substantially all of the surface area of the porous metal substrate.

9. The reactive membrane according to any of the preceding claims wherein the carbon layer has a thickness greater than about 20 Å.

10. The reactive membrane according to any of the preceding claims wherein the metal species includes manganese.

11. The reactive membrane according to any of the preceding claims wherein the metal species includes magnesium.

12. The reactive membrane according to any of the preceding claims wherein the metal species includes alkali metal species.

13. The reactive membrane according to any of the preceding claims wherein the metal species includes substantially deoxygenated metal species.

14. The reactive membrane according to any of the preceding claims wherein the active sites include a first and second metal species.

15. The reactive membrane according to any of the preceding claims wherein the metal species serves as a scavenger, interacting with impurities and removing them from the gas.

16. The reactive membrane according to any of the preceding claims wherein the at least one carbon layer comprises a first carbon layer and the reactive membrane further comprises a second carbon layer.

17. The reactive membrane according to claim 16 wherein the metal species comprises a first at least partially deoxygenated metal species chemically bonded to the first carbon layer and wherein the reactive membrane further comprises a second at least partially deoxygenated metal species chemically bonded to the second carbon layer.

18. A method for removing impurities from a gas comprising directing the gas through the reactive membrane according to any of claims 1-17 and interacting the impurities with the active sites, thereby removing the impurities from the gas.

19. The method according to claim 18 wherein the gas comprises an inert gas.

20. The method according to claim 18 wherein the gas comprises a reactive gas.

21. The method according to claim 18 wherein interacting the impurities with the active sites includes interacting oxygen, water, carbon monoxide, carbon dioxide, or a hydrocarbon with the active sites.

22. The method according to claim 21 wherein interacting the impurities comprises reducing the concentration of the impurities to no more than about 100 ppb.

23. The method according to claim 22 wherein reducing the concentration comprises reducing the concentration to no more than about 1 ppb.

24. The method according to claim 18 wherein directing the gas comprises passing through the reactive membrane a gas associated with an electronics manufacturing process.

25. The method according to any of claims 18 to 24 further comprising interrupting the gas flow through the reactive membrane, heating the reactive membrane to greater than about 300°C in a reducing atmosphere, thereby regenerating the active sites, and re-establishing the gas flow through the reactive membrane.

26. The method according to claim 25 wherein the reducing atmosphere is a hydrogen-containing atmosphere.

27. The method according to claim 26 wherein the reducing atmosphere contains from about 2% to about 35% hydrogen.

28. The method according to any of claims 25 to 27 wherein heating the reactive membrane includes heating the reactive membrane to greater than about 500°C.

29. The method according to any of claims 25 to 28 wherein heating the reactive membrane includes heating the reactive membrane for a period of time greater than about one hour.

30. The method according to any of claims 25 to 29 wherein heating the reactive membrane includes substantially deoxygenating the metal species.

31. A method for forming a reactive membrane for removing impurities from a gas, said method comprising:
(a) depositing at least one layer of carbon on a porous metal substrate;
(b) depositing a precursor metal species on the carbon layer; and
(c) heating the porous metal substrate to form active sites on the carbon layer, wherein the active sites include at least partially deoxygenated metal species chemically bonded to the carbon layer.

32. The method according to claim 31 wherein depositing at least one layer of carbon includes depositing carbon directly on the porous metal substrate.

33. The method according to claim 31 or 32 wherein depositing at least one layer of carbon includes depositing carbon on substantially all of the surfaces of the porous metal substrate.

34. The method according to any of claims 31-33 wherein depositing at least one layer of carbon includes depositing carbon on a porous sintered metal substrate.

35. The method according to claim 34 wherein the sintered metal substrate includes sintered stainless steel fibers or powder.

36. The method according to any of claims 31-35 wherein depositing at least one layer of carbon comprises disproportionating carbon monoxide vapor.

37. The method according to claim 26 wherein the carbon monoxide vapor contains hydrogen.

38. The method according to any of claims 31-35 wherein depositing at least one layer of carbon comprises depositing the carbon layer from a hydrogen-containing vapor.

39. The method according to any of claims 31-38 wherein depositing a precursor metal species on the carbon layer comprises contacting the carbon layer with a precursor metal species in a non-aqueous solvent.

40. The method according to claim 39 wherein the non-aqueous solvent comprises anhydrous ammonia.

41. The method according to claim 39 or 40 wherein the precursor metal species includes alkali metal species.

42. The method according to any of claims 39 to 41 further comprising removing the non-aqueous solvent prior to heating to form active sites.

43. The method according to claim 42 wherein removing the non-aqueous solvent includes purging with an inert gas.

44. The method according to any one of claims 31-43 wherein heating to form active sites comprises heating to greater than 300°C.

45. The method according to claim 44 wherein heating to greater than 300°C comprises heating to greater than 500°C.

46. The method according to any of claims 31-45 wherein heating to form active sites comprises heating for at least one hour.

47. The method according to any of claims 31-46 wherein heating to form active sites includes heating in a reducing atmosphere.

48. The method according to claim 47 wherein the reducing atmosphere comprises greater than 1% hydrogen by volume.

49. The method according to any of claims 31-46 wherein heating to form active sites comprises heating in a vacuum.

50. The method according to any of claims 31-49 wherein heating to form active sites includes substantially deoxygenating the metal species.

51. The method according to any of claims 31-50 wherein the precursor metal species is selected from the group consisting of manganese, magnesium, lithium, sodium, and potassium.

## Patentansprüche

1. Reaktive Membran zur Entfernung von Verunreinigungen aus einem Gas, umfassend:
(a) ein poröses Metallsubstrat; und
(b) wenigstens eine auf dem porösen Metallsubstrat abgeschiedene Kohlenstoffschicht,
wobei die Kohlenstoffschicht so modifiziert ist, daß aktive Stellen vorhanden sind, die wenigstens teilweise desoxidierte Metallspezies enthalten, die an die Kohlenstoffschicht chemisch gebunden sind.

2. Reaktive Membran nach Anspruch 1, wobei das poröse Metallsubstrat eine Porengröße im Bereich von ungefähr 2 bis ungefähr 5 µm aufweist.

3. Reaktive Membran nach Anspruch 1 oder 2, wobei das poröse Metallsubstrat gesinterte Metallfasern umfaßt.

4. Reaktive Membran nach einem der vorhergehenden Ansprüche, wobei das poröse Metallsubstrat gesintertes Metallpulver umfaßt.

5. Reaktive Membran nach einem der vorhergehenden Ansprüche, wobei das poröse Metallsubstrat Edelstahl umfaßt.

6. Reaktive Membran nach Anspruch 5, wobei der Edelstahl 316L Edelstahl umfaßt.

7. Reaktive Membran nach einem der vorhergehenden Ansprüche, wobei die Kohlenstoffschicht direkt auf dem porösen Metallsubstrat abgeschieden wird.

8. Reaktive Membran nach einem der vorhergehenden Ansprüche, wobei die Kohlenstoffschicht im wesentlichen die gesamte Oberfläche des porösen Metallsubstrates bedeckt.

9. Reaktive Membran nach einem der vorhergehenden Ansprüche, wobei die Kohlenstoffschicht eine Dicke von größer als ungefähr 20 Å hat.

10. Reaktive Membran nach einem der vorhergehenden Ansprüche, wobei die Metallspezies Mangan enthält.

11. Reaktive Membran nach einem der vorhergehenden Ansprüche, wobei die Metallspezies Magnesium enthält.

12. Reaktive Membran nach einem der vorhergehenden Ansprüche, wobei die Metallspezies Alkalimetallspezies enthält.

13. Reaktive Membran nach einem der vorhergehenden Ansprüche, wobei die Metallspezies wesentlich desoxidierte Metallspezies enthält.

14. Reaktive Membran nach einem der vorhergehenden Ansprüche, wobei die aktiven Stellen eine erste und eine zweite Metallspezies enthalten.

15. Reaktive Membran nach einem der vorhergehenden Ansprüche, wobei die Metallspezies als Abfangmittel dient, welches mit Verunreinigungen wechselwirkt und diese aus dem Gas entfernt.

16. Reaktive Membran nach einem der vorhergehenden Ansprüche, wobei die wenigstens eine Kohlenstoffschicht eine erste Kohlenstoffschicht umfaßt und die reaktive Membran weiterhin eine zweite Kohlenstoffschicht umfaßt.

17. Reaktive Membran nach Anspruch 16, wobei die Metallspezies eine erste, wenigstens teilweise desoxidierte Metallspezies umfaßt, die an die erste Kohlenstoffschicht chemisch gebunden ist,
und wobei die reaktive Membran weiterhin eine zweite, wenigstens teilweise desoxidierte Metallspezies umfaßt, die an die zweite Kohlenstoffschicht chemisch gebunden ist.

18. Verfahren zum Entfernen von Verunreinigungen aus einem Gas, umfassend
das Durchleiten des Gases durch die reaktive Membran gemäß einem der Ansprüche 1 bis 17 und
das Wechselwirken der Verunreinigungen mit den aktiven Stellen, wodurch die Verunreinigungen aus dem Gas entfernt werden.

19. Verfahren nach Anspruch 18, wobei das Gas ein inertes Gas umfaßt.

20. Verfahren nach Anspruch 18, wobei das Gas ein reaktives Gas umfaßt.

21. Verfahren nach Anspruch 18, wobei das Wechseiwirken der Verunreinigungen mit den aktiven Stellen das Wechseiwirken von Sauerstoff, Wasser, Kohlenmonooxid, Kohlendioxid, oder eines Kohlenwasserstoffes mit den aktiven Stellen einschließt.

22. Verfahren nach Anspruch 21, wobei das Wechselwirken der Verunreinigungen mit den aktiven Stellen das Vermindern der Konzentration der Verunreinigungen auf nicht mehr als ungefähr 100 ppb umfaßt.

23. Verfahren nach Anspruch 22, wobei das Vermindern der Konzentration das Vermindern der Konzentration auf nicht mehr als ungefähr 1 ppb umfaßt.

24. Verfahren nach Anspruch 18, wobei das Durchleiten des Gases das Durchströmen eines Gases durch die reaktive Membran umfaßt, welches mit einem Produktionsverfahren auf dem Gebiet der Elektronik im Zusammenhang steht.

25. Verfahren nach einem der Ansprüche 18 bis 24, umfassend weiterhin
das Unterbrechen des Gasflusses durch die reaktive Membran,
Erhitzen der reaktiven Membran auf mehr als ungefähr 300 °C in einer reduzierenden Atmosphäre, wodurch die aktiven Stellen regeneriert werden,
und Wiederherstellen des Gasflusses durch die reaktive Membran.

26. Verfahren nach Anspruch 25, wobei die reduzierende Atmosphäre eine Wasserstoff enthaltende Atmosphäre ist.

27. Verfahren nach Anspruch 26, wobei die reduzierende Atmosphäre ungefähr 2 % bis ungefähr 35 % Wasserstoff enthält.

28. Verfahren nach einem der Ansprüche 25 bis 27, wobei das Erhitzen der reaktiven Membran das Erhitzen der reaktiven Membran auf mehr als ungefähr 500 °C einschließt.

29. Verfahren nach einem der Ansprüche 25 bis 28, wobei das Erhitzen der reaktiven Membran das Erhitzen der reaktiven Membran während einer Zeitspanne einschließt, die länger als ungefähr eine Stunde ist.

30. Verfahren nach einem der Ansprüche 25 bis 29, wobei das Erhitzen der reaktiven Membran eine wesentliche Desoxidation der Metallspezies einschließt.

31. Verfahren zur Erzeugung einer reaktiven Membran zum Entfernen von Verunreinigungen aus einem Gas, wobei das Verfahren umfaßt:
(a) das Abscheiden von wenigstens einer Kohlenstoffschicht auf einem porösen Metallsubstrat;
(b) das Abscheiden einer Precursor-Metallspezies auf der Kohlenstoffschicht; und
(c) das Erhitzen des porösen Metallsubstrates, um aktive Stellen an der Kohlenstoffschicht zu erzeugen,
wobei die aktiven Stellen wenigstens teilweise desoxidierte Metallspezies enthalten, die chemisch an die Kohlenstoffachicht gebunden sind.

32. Verfahren nach Anspruch 31, wobei das Abscheiden der wenigstens einen Kohlenstoffschicht das Abscheiden von Kohlenstoff direkt auf dem porösen Metallsubstrat einschließt.

33. Verfahren nach Anspruch 31 oder 32, wobei das Abscheiden von wenigstens einer Kohlenstoffschicht das Abscheiden von Kohlenstoff auf im wesentlichen allen Oberflächen des porösen Metallsubstrates einschließt.

34. Verfahren nach einem der Ansprüche 31 bis 33, wobei das Abscheiden von wenigstens einer Kohlenstoffschicht das Abscheiden von Kohlenstoff auf einem porösen gesinterten Metallsubstrat einschließt.

35. Verfahren nach Anspruch 34, wobei das gesinterte Metallsubstrat gesinterte Edelstahlfasern oder -pulver enthält.

36. Verfahren nach einem der Ansprüche 31 bis 35, wobei das Abscheiden von wenigstens einer Kohlenstoffschicht die Disproportionierung von Kohlenmonoxid umfaßt.

37. Verfahren nach Anspruch 36, wobei der Kohlenmonoxiddampf Wasserstoff enthält.

38. Verfahren nach einem der Ansprüche 31 bis 35, wobei das Abscheiden von wenigstens einer Schicht Kohlenstoff das Abscheiden der Kohlenstoffschicht aus einem Wasserstoff enthaltenden Dampf einschließt.

39. Verfahren nach einem der Ansprüche 31 bis 38, wobei das Abscheiden einer Precursor-Metallspezies auf der Kohlenstoffschicht das Inkontaktbringen der Kohlenstoffschicht mit einer Precursor-Metallspezies in einem nichtwäßrigen Lösungsmittel umfaßt.

40. Verfahren nach Anspruch 39, wobei das nichtwäßrige Lösungsmittel wasserfreien Ammoniak umfaßt.

41. Verfahren nach Anspruch 39 oder 40, wobei die Precursor-Metallspezies Alkalimetallspezies enthält.

42. Verfahren nach einem der Ansprüche 39 bis 41, umfassend weiterhin das Entfernen des nichtwäßrigen Lösungsmittels vor dem aktive Stellen bildenden Erhitzen.

43. Verfahren nach Anspruch 42, wobei das Entfernen des nichtwäßrigen Lösungsmittels das Spülen mit einem Inertgas einschließt.

44. Verfahren nach einem der Ansprüche 31 bis 43, wobei das aktive Stellen bildende Erhitzen das Erhitzen auf mehr als 300 °C umfaßt.

45. Verfahren nach Anspruch 44, wobei das Erhitzen auf mehr als 300 °C das Erhitzen auf mehr als 500 °C umfaßt.

46. Verfahren nach einem der Ansprüche 31 bis 45, wobei das aktive Stellen bildende Erhitzen das Erhitzen für wenigstens eine Stunde umfaßt.

47. Verfahren nach einem der Ansprüche 31 bis 46, wobei das aktive Stellen bildende Erhitzen das Erhitzen in einer reduzierenden Atmosphäre einschließt.

48. Verfahren nach Anspruch 47, wobei die reduzierende Atmosphäre mehr als 1 Vol.% Wasserstoff umfaßt.

49. Verfahren nach einem der Ansprüche 31 bis 46, wobei das aktive Stellen bildende Erhitzen das Erhitzen im Vakuum umfaßt.

50. Verfahren nach einem der Ansprüche 31 bis 49, wobei das aktive Stellen bildende Erhitzen eine wesentliche Desoxidation der Metallspezies einschließt.

51. Verfahren nach einem der Ansprüche 31 bis 50, wobei die Precursor-Metallspezies ausgewählt ist aus der Gruppe bestehend aus Mangan, Magnesium, Lithium, Natrium und Kalium.

## Revendications

1. Membrane réactive pour éliminer des impuretés d'un gaz comprenant:
(a) un substrat métallique poreux; et
(b) au moins une couche de carbone déposée sur le substrat métallique poreux, la couche de carbone étant modifiée pour présenter des sites actifs qui comprennent au moins une espèce métallique partiellement désoxygénée liée chimiquement à la couche de carbone.

2. Membrane réactive selon la revendication 1, caractérisée en ce que le substrat métallique poreux a une taille de pores dans la plage d'environ 2 à environ 5 microns.

3. Membrane réaction selon la revendication 1 ou 2, caractérisée en ce que le substrat métallique poreux comprend des fibres métalliques frittées.

4. Membrane réactive selon l'une quelconque des revendications précédentes, caractérisée en ce que le substrat métallique poreux comprend une poudre métallique frittée.

5. Membrane réactive selon l'une quelconque des revendications précédentes, caractérisée en ce que le substrat métallique poreux comprend de l'acier inoxydable.

6. Membrane réactive selon la revendication 5, caractérisée en ce que l'acier inoxydable comprend l'acier inoxydable 316L.

7. Membrane réactive selon l'une quelconque des revendications précédentes, caractérisée en ce que la couche de carbone est déposée directement sur le substrat métallique poreux.

8. Membrane réactive selon l'une quelconque des revendications précédentes, caractérisée en ce que la couche de carbone recouvre essentiellement la totalité de la zone superficielle du substrat métallique poreux.

9. Membrane réactive selon l'une quelconque des revendications précédentes, caractérisée en ce que la couche de carbone a une épaisseur supérieure à environ 20 Å.

10. Membrane réactive selon l'une quelconque des revendications précédentes, caractérisée en ce que l'espèce métallique comprend le manganèse.

11. Membrane réactive selon l'une quelconque des revendications précédentes, caractérisée en ce que l'espèce métallique comprend le magnésium.

12. Membrane réactive selon l'une quelconque des revendications précédentes, caractérisée en ce que l'espèce métallique comprend une espèce de métal alcalin.

13. Membrane réactive selon l'une quelconque des revendications précédentes, caractérisée en ce que l'espèce métallique comprend une espèce métallique essentiellement désoxygénée.

14. Membrane réactive selon l'une quelconque des revendications précédentes, caractérisée en ce que les sites actifs comprennent une première et une seconde espèces métalliques.

15. Membrane réactive selon l'une quelconque des revendications précédentes, caractérisée en ce que l'espèce métallique sert de fixateur, interagissant avec des impuretés et les éliminant du gaz.

16. Membrane réactive selon l'une quelconque des revendications précédentes, caractérisée en ce qu'au moins une couche de carbone comprend une première couche de carbone et que la membrane réactive comprend en outre une seconde couche de carbone.

17. Membrane réactive selon la revendication 16, caractérisée en ce que l'espèce métallique comprend une première espèce métallique au moins partiellement désoxygénée chimiquement liée à la première couche de carbone et en ce que la membrane réactive comprend en outre une seconde espèce métallique au moins partiellement désoxygénée chimiquement liée à la seconde couche de carbone.

18. Procédé pour éliminer des impuretés se trouvant dans un gaz comprenant l'amenée du gaz à travers la membrane réactive selon l'une quelconque des revendications 1 à 17 et l'interaction des impuretés avec les sites actifs, en éliminant ainsi les impuretés du gaz.

19. Procédé selon la revendication 18, caractérisé en ce que le gaz comprend un gaz inerte.

20. Procédé selon la revendication 18, caractérisé en ce que le gaz comprend un gaz réactif.

21. Procédé selon la revendication 18, caractérisé en ce que l'interaction des impuretés avec les sites actifs comprend l'interaction de l'oxygène, de l'eau, du monoxyde de carbone, du dioxyde de carbone, ou d'un hydrocarbure avec les sites actifs.

22. Procédé selon la revendication 21, caractérisé en ce que l'interaction des impuretés comprend la réduction de la concentration des impuretés à pas plus qu'environ 100 ppb.

23. Procédé selon la revendication 22, caractérisé en ce que la réduction de la concentration comprend la réduction de la concentration à pas plus qu'environ 1 ppb.

24. Procédé selon la revendication 18, caractérisé en ce que l'amenée du gaz comprend le passage à travers la membrane réactive d'un gaz associé avec un procédé de fabrication électronique.

25. Procédé selon l'une quelconque des revendications 18 à 24 comprenant en outre l'interruption de la circulation du gaz à travers la membrane réactive, le chauffage de la membrane réactive à une température supérieure à environ 300°C dans une atmosphère réductrice, en régénérant ainsi les sites actifs, et le ré-établissement de la circulation du gaz à travers la membrane réactive.

26. Procédé selon la revendication 25, caractérisé en ce que l'atmosphère réductrice est une atmosphère contenant de l'hydrogène.

27. Procédé selon la revendication 26, caractérisé en ce que l'atmosphère réductrice comprend environ 2 % à environ 35 % d'hydrogène.

28. Procédé selon l'une quelconque des revendications 25 à 27, caractérisé en ce que le chauffage de la membrane réactive comprend le chauffage de la membrane réactive à une température supérieure à environ 500°C.

29. Procédé selon l'une quelconque des revendications 25 à 28, caractérisé en ce que le chauffage de la membrane réactive comprend le chauffage de ta membrane réactive pendant une période de temps supérieure à environ une heure.

30. Procédé selon l'une quelconque des revendications 25 à 29, caractérisé en ce que le chauffage de la membrane réactive comprend essentiellement la désoxygénation de l'espèce métallique.

31. Procédé pour former une membrane réactive pour éliminer des impuretés se trouvant dans un gaz, ledit procédé comprenant:
(a) le dépôt d'au moins une couche de carbone sur un substrat métallique poreux;
(b) le dépôt d'une espèce métallique précurseur sur la couche de carbone ; et
(c) le chauffage du substrat métallique poreux pour former des sites actifs sur la couche de carbone, dans lequel les sites actifs comprennent au moins une espèce métallique partiellement désoxygénée liée chimiquement à la couche de carbone.

32. Procédé selon la revendication 31, caractérisé en ce que le dépôt d'au moins une couche de carbone comprend le dépôt de carbone directement sur le substrat métallique poreux.

33. Procédé selon la revendication 31 ou 32, caractérisé en ce que le dépôt d'au moins une couche de carbone comprend le dépôt de carbone sur essentiellement toutes les surfaces du substrat métallique poreux.

34. Procédé selon l'une quelconque des revendications 31 à 33, caractérisé en ce que le dépôt d'au moins une couche de carbone comprend le dépôt de carbone sur un substrat métallique fritté poreux.

35. Procédé selon la revendication 34, caractérisé en ce que substrat métallique fritté comprend des fibres ou une poudre d'acier inoxydable fritté.

36. Procédé selon l'une quelconque des revendications 31 à 35, caractérisé en ce que le dépôt d'au moins une couche de carbone comprend la disproportion de vapeur de monoxyde de carbone.

37. Procédé selon la revendication 36, caractérisé en ce que la vapeur de monoxyde de carbone contient de l'hydrogène.

38. Procédé selon l'une quelconque des revendications 31 à 35, caractérisé en ce que le dépôt d'au moins une couche de carbone comprend le dépôt de la couche de carbone à partir d'une vapeur contenant de l'hydrogène.

39. Procédé selon l'une quelconque des revendications 31 à 38, caractérisé en ce que le dépôt d'une espèce métallique précurseur sur la couche de carbone comprend la mise en contact de la couche de carbone avec une espèce métallique précurseur dans un solvant non aqueux.

40. Procédé selon la revendication 39, caractérisé en ce que le solvant non aqueux comprend l'ammoniac anhydre.

41. Procédé selon la revendication 39 ou 40, caractérisé en ce que l'espèce métallique précurseur comprend une espèce de métal alcalin.

42. Procédé selon l'une quelconque des revendications 39 à 41, comprenant en outre l'élimination du solvant non aqueux avant le chauffage pour former des sites actifs.

43. Procédé selon la revendication 42, caractérisé en ce que l'élimination du solvant non aqueux comprend la purge par un gaz inerte.

44. Procédé selon l'une quelconque des revendications 31 à 43, caractérisé en ce que le chauffage pour former des sites actifs comprend le chauffage à une température supérieure à 300°C.

45. Procédé selon la revendication 44, caractérisé en ce que le chauffage à une température supérieure à 300°C comprend le chauffage à une température supérieure à 500°C.

46. Procédé selon l'une quelconque des revendications 31 à 45, caractérisé en ce que le chauffage pour former des sites actifs comprend le chauffage pendant au moins une heure.

47. Procédé selon l'une quelconque des revendications 31 à 46, caractérisé en ce que le chauffage pour former des sites actifs comprend le chauffage dans une atmosphère réductrice.

48. Procédé selon la revendication 47, caractérisé en ce que l'atmosphère réductrice comprend plus de 1% d'hydrogène en volume.

49. Procédé selon l'une quelconque des revendications 31 à 46, caractérisé en ce que le chauffage pour former des sites actifs comprend le chauffage sous vide.

50. Procédé selon l'une quelconque des revendications 31 à 49, caractérisé en ce que le chauffage pour former des sites actifs comprend essentiellement la désoxygénation de l'espèce métallique.

51. Procédé selon l'une quelconque des revendications 31 à 50, caractérisé en ce que l'espèce métallique précurseur est sélectionnée dans le groupe constitué par le manganèse, le magnésium, le lithium, le sodium, et le potassium.
